Europäisches Patentamt

European Patent Office

Office européen des brevets

(11) Veröffentlichungsnummer: **0 081 717**
**A1**

# (12) EUROPÄISCHE PATENTANMELDUNG

(21) Anmeldenummer: 82110904.8

(22) Anmeldetag: 25.11.82

(51) Int. Cl.³: **B 60 J 1/10**

(30) Priorität: 04.12.81 AT 5211/81

(43) Veröffentlichungstag der Anmeldung: 22.06.83
Patentblatt 83/25

(84) Benannte Vertragsstaaten: **BE DE FR NL**

(71) Anmelder: **Vereinigte Metallwerke Ranshofen-Berndorf
AG, A-5282 Braunau am Inn (AT)**

(72) Erfinder: **Gemeinböck, Gerhard,
Anton-Sattlergasse 115/17/7/23, A-1220 Wien (AT)**
Erfinder: **Rotter, Josef, A-2512 Tribuswinkel (AT)**

(74) Vertreter: **Hain, Leonhard, Dipl.-Ing., Tal 18/IV,
D-8000 München 2 (DE)**

(54) **Fenster, insbesondere für Fahrzeuge.**

(57) Bei dem Fenster ist ein Glasscheibensatz (3) unter Zwischenlage einer Dichtung (4) in einem im Querschnitt einteiligen Profilrahmen (1, 2) des Fensters eingeschoben. Um dieses Einschieben zu erleichtern und um einen festen Sitz zu gewährleisten, weist die Dichtung (4) mindestens an einer ihrer Seitenflächen auf den Umfang verteilte Erhebungen (6) auf.

DIPL. ING. LEONH. HAIN
PATENTANWALT
8 MÜNCHEN 8
TAL 18 · T. 29 47 98

Anmelder: Vereinigte Metallwerke Ranshofen-Berndorf AG
5282 Braunau am Inn, Österreich

Titel:     Fenster, insbesondere für Fahrzeuge

## Beschreibung

Die Erfindung betrifft ein Fenster, insbesondere für Fahrzeuge, mit einem profilierten Metallrahmen, der die Glasscheibe unter Zwischenlage einer Dichtung hält.

Die bekannten Fahrzeugfenster, welche wegen der Schwingungen, denen solche Fenster sowohl durch die Bewegung des Fahrzeuges selbst als auch durch die Luftdruckströme, wie sie insbesondere bei Zugsbegegnungen vorkommen, ausgesetzt sind, verlangen einen absolut festen und sicheren Sitz der Glasscheibe im Rahmenprofil, da andernfalls durch die membranartigen Bewegungen der Glasscheibe eine Pumpwirkung ausgeübt wird, die Regenwasser durch den Rahmen nach innen treten läßt. Da es nicht möglich ist, infolge der großen Flächenpressung eine Glasscheibe oder einen Glasscheibensatz mit der Dichtung in die Rahmennut einzuschieben, werden derartige Fenster in der Regel mit zweiteiligem Rahmen ausgeführt, wobei dann diese beiden Profilrahmenteile unter Zwischenlage des Glasscheibensatzes und der Dichtung durch eine Vielzahl von Schrauben miteinander verbunden werden müssen. Dies bedingt nicht nur eine aufwendige Herstellungsweise, sondern auch einen unschönen ästhetischen Eindruck, da diese Schrauben am Rahmen sichtbar sind.

Der Erfindung liegt daher die Aufgabe zugrunde, ein Fenster zu schaffen, bei dem der Glasscheibensatz mit seiner Dichtung in einen einteiligen Fensterrahmen einschiebbar ist.

Zur Lösung dieser Aufgabe ist das Fenster gemäß der Erfindung dadurch gekennzeichnet, daß der Rahmen im Querschnitt einteilig ausgebildet ist und zwischen einer Seitenfläche der Dichtung und dem Profilrahmen einerseits und/oder dem Glasscheibensatz andererseits auf den Umfang verteilte Erhebungen vorgesehen sind.

Nach einem weiteren Kennzeichen der Erfindung weisen die Erhebungen Keilform auf, wodurch ein besonders genaues Anpassen bei leichtem Einschub ermöglicht wird.

Die Erfindung wird nachfolgend anhand eines Ausführungsbeispieles, das auch in der Zeichnung dargestellt ist, näher beschrieben. Es zeigen:

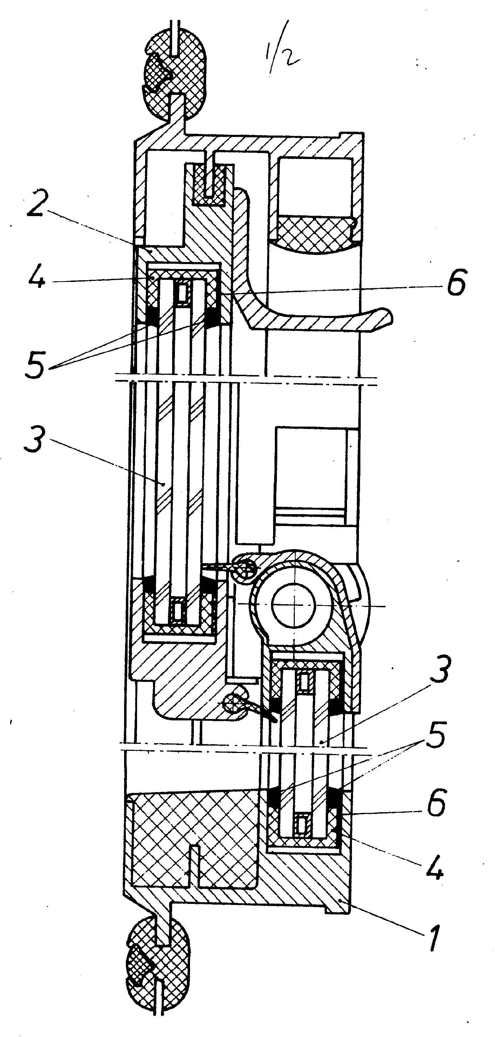

Fig. 1 ein fertig zusammengebautes Fenster im Schnitt und

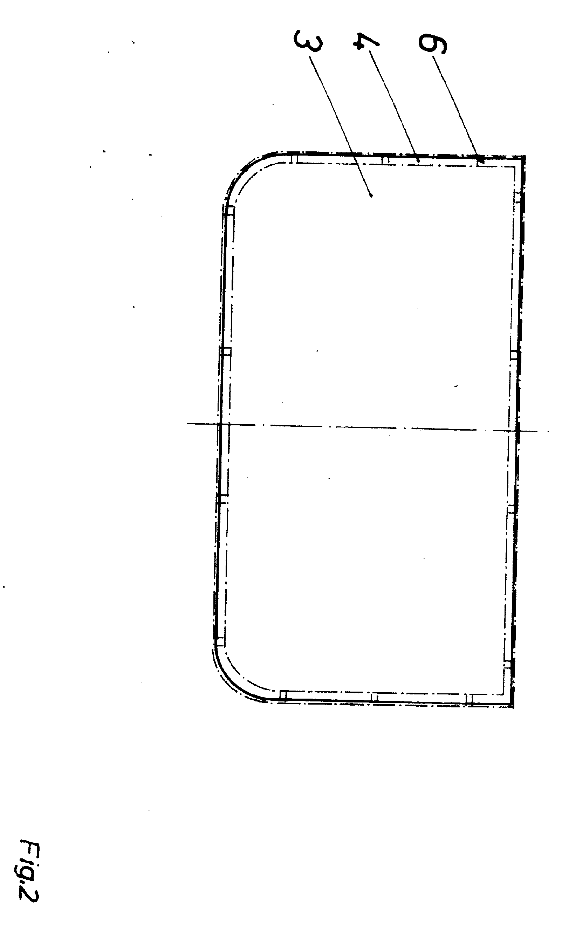

Fig. 2 die Verglasung vor dem Einbau in Seitenansicht.

Wie man aus der Zeichnung erkennen kann, ist ein Waggonfenster mit einem unteren fix verglasten Rahmenteil und einem oberen Schiebeteil jeweils mit einem zweckmäßig mehrscheibigen Isolierglasscheibensatz 3 ausgerüstet. Dieser Scheibensatz wird in einer Nut des Fensterstockprofilrahmens 1 bzw. des Fensterflügelprofilrahmens 2 unter Zwischenlage einer Dichtung 4 gehalten. Um den Scheibensatz 3 in die Nut der Profilrahmen 1 und 2 einschieben zu können, ist die Dichtung 4, zweckmäßig aus Thiokolkunststoff, vorzugsweise auf der Fenster-Innenseite mit in Abständen angeordneten Erhebungen 6 ausgestattet, welche sich zweckmäßig auf die volle Dichtungs-bzw. Nuthöhe erstrecken und somit satt am Profilrahmen 1, 2 anliegen. Um ein besonders genaues Anpassen zu ermöglichen, ist diese Thiokoldichtung, die den Scheibensatz rundum ummantelt, mit Erhebungen in Keilform versehen, welche bei leichtem Einschub eine genaue Angleichung an die Distanz ermöglichen. Es werden dabei auch fabrikationsbedingte Durchbiegungen der Glasscheiben sicher beherrscht und die Scheibe ist im Glaskanal spielfrei und dicht festgelegt, wobei nicht nur Ungenauigkeiten der Glasscheibe ausgeglichen, sondern auch eine Vorspannung im Glaskanal erreicht werden kann, die eine absolute Spielfreiheit gewährleisten. Die Zwischenräume zwischen den Erhebungen werden nach außen noch durch eine Randabdichtung 5 verschlossen, wodurch sich eine vollkommen spaltfreie Konstruktion ergibt. Diese Randabdichtung kann weichplastisch ausgeführt werden, da die mechanische Festlegung durch die in Abständen angeordneten keilförmigen Erhebungen 6 der Dichtung 4 gegeben ist, welche vor dem Einsetzen des Scheibensatzes in einer Spezialform gepreßt werden und dadurch auch planparallel sind. Das leichte Einsetzen wird dadurch ermöglicht, daß diese Erhebungen nicht auf dem gesamten Umfang, sondern nur stellenweise in Abständen vorgesehen sind.

Die Erfindung ist auf das dargestellte Ausführungsbeispiel nicht beschränkt. Anstelle auf der Fenster-Innenseite können die Erhebungen 6 auch auf beiden Seiten vorhanden sein. Sie sind sowohl für Einfach-, als auch für Doppel- oder Dreifachverglasungen geeignet und können auch aus anderem geeigneten Dichtungskunststoff als Thiokolkunststoff oder auch aus anderem Werkstoff, wie Metall oder Glas ausgeführt

0081717

sein. Im letzterem Fall können die Erhebungen am Profilrahmen oder am Scheibensatz vorgesehen sein. Die Erhebungen können aus weicherem als auch aus härterem Werkstoff als die Dichtung 4 bestehen.

## Patentansprüche

1. Fenster, insbesondere für Fahrzeuge mit einem Profilrahmen (1,2) der einen Glasscheibensatz (3) unter Zwischenlage einer Dichtung (4) hält, dadurch gekennzeichnet, daß der Profilrahmen (1,2) im Querschnitt einteilig ausgebildet ist und zwischen einer Seitenfläche der Dichtung (4) und dem Profilrahmen (1,2) einerseits und/oder dem Glasscheibensatz (3) andererseits auf den Dichtungsumfang verteilte Erhebungen (6) vorgesehen sind.

2. Fenster nach Anspruch 1, dadurch gekennzeichnet, daß die Erhebungen (6) an einer Dichtung (4), vorzugsweise aus Thiokolkunststoff, ausgebildet sind.

3. Fenster nach Anspruch 1 oder 2, dadurch gekennzeichnet, daß die Dichtung (4) den Glasscheibensatz (3) ummantelt.

4. Fenster nach einem der Ansprüche 1 bis 3, dadurch gekennzeichnet, daß die Erhebungen (6) im Querschnitt Keilform aufweisen.

5. Fenster nach einem der Ansprüche 1 bis 4, dadurch gekennzeichnet, daß die Erhebungen (6) vom Dichtungsrand nach innen ansteigende Höhe aufweisen.

6. Fenster nach einem der Ansprüche 1 bis 5, dadurch gekennzeichnet, daß die Erhebungen (6) durch eine nachträglich angebrachte Randabdichtung (5) abgedeckt sind.

0081717
Fig.1

1/2

Fig.2

**Europäisches Patentamt**

**EUROPÄISCHER RECHERCHENBERICHT**

Nummer der Anmeldung

EP  82 11 0904

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | B 60 J    1/10 |
| A | US-A-2 667 951   (G.R. GALL) | | |
| | * Figur 2 * | | |
| | --- | | |
| A | US-A-3 442 059   (G. KESSLER) | | |
| | * Figur 2 * | | |
| | ----- | | |

**RECHERCHIERTE SACHGEBIETE (Int. Cl. 3)**

| | |
|---|---|
| B 60 J | 1/00 |
| E 06 B | 3/62 |
| B 61 D | 25/00 |

Der vorliegende Recherchenbericht wurde für alle Patentansprüche erstellt.

| Recherchenort | Abschlußdatum der Recherche | Prüfer |
|---|---|---|
| BERLIN | 22-02-1983 | BECKER W D H |